(19) Europäisches Patentamt
European Patent Office
Office européen des brevets

(11) **EP 2 407 946 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(51) Int Cl.:
***G08B 29/04*** *(2006.01)*

(21) Anmeldenummer: **10169742.3**

(22) Anmeldetag: **15.07.2010**

(54) **Erkennen von Verstopfungen und Unterbrüchen bei einem Ansaug-rauchmelder (ASD)**

Detection of blockages and interruptions in an aspirating smoke detector (ASD)

Détection d'encrassements et de ruptures dans un détecteur de fumées par aspiration (ASD)

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**18.01.2012 Patentblatt 2012/03**

(73) Patentinhaber: **Siemens Schweiz AG**
**8047 Zürich (CH)**

(72) Erfinder:
• **Cole, Martin Terence**
**Patterson Lakes, Victoria, 3197 (AU)**

• **Fischer, Martin**
**8180, Bülach (CH)**
• **Loepfe, Markus**
**8706, Feldmeilen (CH)**

(74) Vertreter: **Maier, Daniel Oliver**
**Siemens AG**
**Postfach 22 16 34**
**80506 München (DE)**

(56) Entgegenhaltungen:
**EP-A1- 0 696 787    EP-A1- 1 638 062**
**EP-A2- 1 006 500    EP-A2- 1 056 062**
**US-A- 5 163 818**

**Beschreibung**

Die Erfindung betrifft ein Verfahren zum Erkennen von Verstopfungen und Unterbrüchen in einem Rohrsystem eines Ansaugrauchmelders. Derartige Ansaugrauchmelder werden in der Fachsprache auch als ASD (für Aspirated Smoke Detector) bezeichnet. Dabei wird Luft mittels eines Lüfters über das Rohrsystem aus zu überwachenden Räumen und Einrichtungen angesaugt und auf Brandkenngrössen hin überwacht. Es werden weiterhin der Luftstrom zumindest eines Teils der angesaugten Luft sowie die Lufttemperatur gemessen. Es wird eine Verstopfungsmeldung ausgegeben, wenn der Luftstrom einen vorgegebenen unteren Grenzwert unterschreitet. Es wird eine Unterbruchmeldung ausgegeben, wenn der Luftstrom einen vorgegebenen oberen Grenzwert überschreitet.

Die Erfindung betrifft ausserdem einen Ansaugrauchmelder, welcher zumindest einen Detektor für Brandkenngrössen mit einer Auswerteinheit zur Ausgabe einer Warn- oder Brandmeldung sowie einen Lüfter mit einem daran angeschlossenen Rohrsystem zum Zuführen von Luft zum Detektor aufweist. Der Ansaugrauchmelder weist einen Luftstrommesser zum Messen des Luftstroms zumindest eines Teils der angesaugten Luft sowie einen Temperatursensor zum Messen der Lufttemperatur, insbesondere der angesaugten Luft, auf. Er umfasst weiterhin eine Luftstromüberwachungseinrichtung zur Ausgabe einer Verstopfungsmeldung für den Fall, dass der Luftstrom einen vorgegebenen unteren Grenzwert unterschreitet, und zur Ausgabe einer Unterbrechungsmeldung für den Fall, dass der Luftstrom einen vorgegebenen oberen Grenzwert überschreitet.

Aus der europäischen Offenlegungsschrift EP 1 006 500 A2 ist ein als Punktmelder ausgebildeter Rauchmelder mit einer Ansaugeinheit und einem Flusssensor bekannt. Die Ansaugeinheit saugt Luft aus der direkten Umgebung des Rauchmelders hinein in einen Rauchdetektionsbereich. Ein Flussüberwachungssensor liefert ein Feedbacksignal, um pulsmodulierte Ansteuersignale für eine mit der Ansaugeinheit gekoppelte Steuereinheit zu variieren. Der Flusssensor kann z.B. einen selbstbeheizten Thermistor aufweisen. Es können eine Vielzahl von temperaturabhängigen Widerständen bzw. von Temperatursensoren verwendet werden, um den Luftfluss, die Betriebstemperatur der Ansaugeinheit oder die Lufttemperatur am Auslass der Ansaugeinheit zu überwachen. Es können ferner ein Flussparameter, Umgebungsluftparameter in einem Detektionsvolumen oder die Temperatur der Ansaugeinheit durch eine lokale Steuereinheit überwacht werden. Es können als Antwort auf die überwachten Parameter auch die Ansteuersignale für die Ansaugeinheit moduliert werden.

Aus der europäischen Offenlegungsschrift EP 1 638 062 A1 ist ein Verfahren zur Erkennung von Verstopfungen und Unterbrüchen im Rohrsystem eines ansaugenden Brandmelders bekannt, bei dem der Brandmelder gleichfalls Luft über das Rohrsystem aus einem oder mehreren Überwachungsräumen oder elektrischen Geräten ansaugt und auf Brandkenngrössen hin überwacht. Der ansaugende Brandmelder überwacht einen mit einem Luftstromsensor und/oder anhand von aktuellen Lüfterdaten ermittelten Massen- und/oder Volumenstrom durch Vergleich mit vorgegebenen Grenzwerten. Gemäss der dortigen Erfindung wird ein Korrekturwert ermittelt, der Änderungen der Eigenschaften des aus dem Ansaugrohr und Lüfter bestehenden Systems repräsentiert, die auf Dichteänderungen der Luft und/oder wenigstens einem eine Luftdichteänderung hervorrufenden Umweltparameter beruhen. Dieser Korrekturwert wird zur Korrektur des Massen-und/oder Volumenstrommesswertes und/oder zur Anpassung der Grenzwerte herangezogen.

Aus der europäischen Offenlegungsschrift EP 0 696 787 A1 ist ein Verfahren zum Erkennen von Bränden und Gasen in Räumen oder in elektrischen oder elektronischen Geräten bekannt, bei dem ein repräsentativer Volumenanteil der Raumluft bzw. des Kühlluftstroms des Gerätes abgegriffen und einer Messkammer mit wenigstens einem Detektor zur Erfassung einer Brandkenngrösse zugeführt wird. Es wird der Luftstrom der zugeführten Luft auf Änderungen überwacht. Ferner werden auf die abgegriffene und zugeführte Luft einwirkende Druckschwankungen, insbesondere des atmosphärischen Luftdrucks, kompensiert. Hierzu wird das Ausgangssignal eines Luftstromsensors durch das Ausgangssignal eines Drucksensors korrigiert.

Für die Luftstromüberwachung ist der Luftvolumenstrom $\dot{V}$ der abgegriffenen repräsentativen Luftteilmenge massgeblich. Dieser sollte daher möglichst konstant bleiben. Der Luftvolumenstrom kann z.B. mittels eines Flügelrad-Anemometers oder mittels eines thermischen Luftstromsensors gemessen werden, dessen Ausgangssignal ein Mass für einen zum Luftvolumenstrom in etwa proportionalen Luftmassenstrom $\dot{m}$ ist.

Der Massenstrom $\dot{m}$ und der Volumenstrom $\dot{V}$ sind dabei bekanntermassen gemäss der physikalischen Beziehung

$$\dot{m} = \rho \cdot \dot{V} \qquad\qquad\qquad (\text{I})$$

über die Dichte $\rho$ miteinander verknüpft. Letztere ist gemäss der physikalischen Beziehung

$$\rho = \frac{p}{R_f \cdot T} \qquad\qquad (\text{II})$$

mit dem Luftdruck p, mit der Gaskonstante $R_f$ für die Luft und mit der Lufttemperatur T verknüpft. Die Dichte ρ ist somit proportional zum Luftdruck p und umgekehrt proportional zur Lufttemperatur T. Die Gaskonstante $R_f$ ist nach folgender physikalischer Beziehung massgeblich von der Luftfeuchte abhängig:

$$R_f = \frac{R_l}{1 - \varphi \cdot p_d / p \cdot (1 - R_l / R_d)}, \qquad\qquad (\text{III})$$

wobei mit φ die relative Luftfeuchtigkeit, mit $R_l$ die Gaskonstante für trockene Luft, mit $R_d$ die Gaskonstante von Wasserdampf, mit p der Umgebungsdruck und mit $p_d$ der Sättigungsdampfdruck von Wasser in Luft bezeichnet sind.

Das in der eingangs genannten EP 1 638 062 A1 beschriebene Verfahren ist allerdings in Bezug auf die Ermittlung des Korrekturwertes komplex, wobei dieser Korrekturwert Änderungen der Eigenschaften des aus dem Ansaugrohr und Lüfter bestehenden Systems repräsentieren soll, die auf Dichteänderungen der Luft und/oder wenigstens einem eine Luftdichteänderung hervorrufenden Umweltparameter beruhen.

Ein weiterer Nachteil liegt in der Trägheit des Korrektureingriffs, das heisst in der Korrektur des vom Luftstromsensor ausgegebenen Luftvolumenstrommesswertes bzw. Luftmassenstromwertes respektive in der Korrektur der Ober- und Untergrenzen für den Luftvolumenstrom bzw. für den Luftmassenstrom für einen Unterbruch bzw. für eine Verstopfung.

Davon ausgehend ist eine Aufgabe der Erfindung, ein einfacheres und zugleich dynamischeres Verfahren für die Luftstromüberwachung bei einem Ansaugrauchmelder anzugeben.

Es ist eine weitere Aufgabe der Erfindung einen Ansaugrauchmelder anzugeben, welcher eine vereinfachte und zugleich dynamischere Luftstromüberwachung aufweist.

Die Aufgabe der Erfindung wird mit den Gegenständen der unabhängigen Patentansprüche gelöst. Vorteilhafte Ausführungsformen und Verfahrensvarianten der vorliegenden Erfindung sind in den abhängigen Ansprüchen angegeben.

Erfindungsgemäss wird die Drehzahl des Lüfters mit zunehmender Lufttemperatur erhöht und mit abnehmender Lufttemperatur erniedrigt.

Der Kern der Erfindung liegt in der Erkenntnis, dass - wenn bei angenommener konstanter Lüfterdrehzahl die Temperatur der angesaugten Luft steigt oder fällt - sich als Folge davon der Luftstrom, d.h. der Luftvolumenstrom oder der Luftmassenstrom, erniedrigt bzw. erhöht, und dass diese Erniedrigung bzw. Erhöhung des Luftstroms wieder durch eine entsprechende Erhöhung bzw. Erniedrigung der Lüfterdrehzahl ausgeglichen werden kann.

Dadurch müssen keinerlei Anpassungen oder Korrekturen am Ausgangssignal bzw. an den Grenzwerten für einen Unterbruch bzw. für eine Verstopfung - abgesehen von einer gegebenenfalls erforderlichen Filterung des Ausgangssignals des Luftstrommessers zur Rausch- und Störsignalunterdrückung - vorgenommen werden. Dadurch vereinfacht sich die Luftstromüberwachung erheblich. Durch den Wegfall der Anpassung erfolgt diese Überwachung zugleich dynamischer. Das Ausgangssignal des Luftstrommessers wird somit direkt mit fest vorgegebenen Grenzwerten für Verstopfungen oder Unterbrüche verglichen. Die Grenzwerte können z.B. bei ± 20 % über einen bei der Inbetriebnahme ermittelten Luftstrommittelwert liegen. Der Luftstrommittelwert ist typischerweise ein mittlerer Luftvolumenstromwert, gemessen in Liter pro Sekunde.

Vorzugsweise wird die Lüfterdrehzahl im Wesentlichen linear, insbesondere proportional zur gemessenen Lufttemperatur erhöht bzw. erniedrigt. Dabei wird angenommen, dass sich der im Rohrsystem einstellende Luftstrom um eine betriebliche Einsatztemperatur des Ansaugrauchmelders herum, wie z.B. von 20°C, in etwa proportional zur Lüfterdrehzahl n ist.

Nach einer bevorzugten Verfahrenvariante wird die Lüfterdrehzahl in Abhängigkeit von der Lufttemperatur derart eingestellt, dass der Luftstrom, d.h. der Luftvolumenstrom bzw. Luftmassenstrom, im Wesentlichen unverändert bleibt. In diesem Fall kann die Erhöhung bzw. Erniedrigung über eine empirische Funktion nachgebildet werden, wie z.B. durch eine mathematische Funktion zweiter, dritter oder höherer Ordnung. Die mathematische Funktion kann auch eine lineare Begrenzungsfunktion aufweisen, welche bei Überschreiten einer vorgebbaren oberen Lufttemperaturgrenze und/oder bei Unterschreiten einer vorgebbaren unteren Lufttemperaturgrenze die Lüfterdrehzahl unverändert lässt.

Mit "Einstellen der Lüfterdrehzahl" ist gemeint, dass diese auf eine feste Drehzahl im Sinne einer geschlossenen Regelschleife geregelt wird.

Nach einer weiteren Verfahrensvariante wird zusätzlich der Luftdruck gemessen und die Lüfterdrehzahl mit zunehmendem Luftdruck erniedrigt sowie mit abnehmendem Luftdruck erhöht. Dadurch kann zum einen der Einfluss der Höhenlage einer installierten und zu überwachenden Anlage, wie z.B. bei einer Lage über 2000 Höhenmeter, ausgeglichen werden. Zum anderen kann der Einfluss starker meteorologischer Luftdruckänderungen auf den Luftstrom, wie z.B. bei einem Gewitter, durch eine entsprechende geänderte Einstellung der Lüfterdrehzahl zumindest in etwa ausgeglichen werden.

Nach einer Verfahrensvariante wird die Lüfterdrehzahl umgekehrt proportional zum Luftdruck erniedrigt bzw. erhöht, d.h. auf eine entsprechende Lüfterdrehzahl geregelt.

Vorzugsweise wird dann die Lüfterdrehzahl in Abhängigkeit vom Luftdruck derart eingestellt, dass der Luftstrom im Wesentlichen unverändert bleibt. Auch in diesem Fall kann die Erniedrigung bzw. Erhöhung über eine empirische Funktion nachgebildet werden, wie z.B. durch eine mathematische Funktion zweiter, dritter oder höherer Ordnung. Die mathematische Funktion kann eine Begrenzungsfunktion aufweisen, welche bei Überschreiten einer vorgebbaren oberen Luftdruckgrenze und/oder bei Unterschreiten einer vorgebbaren unteren Luftdruckgrenze die Lüfterdrehzahl unverändert lässt.

In Summe wird die Lüfterdrehzahl in Abhängigkeit von der gemessenen Lufttemperatur und vom gemessenen Luftdruck erhöht bzw. erniedrigt. Hierzu kann eine gemeinsame Funktion gebildet werden, welche die beiden gemessenen physikalischen Eingangswerte Lufttemperatur und Luftdruck in einen einzustellenden Lüfterdrehzahlwert abbildet.

Nach einer weiteren Verfahrensvariante wird neben der Lufttemperatur und gegebenenfalls neben dem Luftdruck zusätzlich die Luftfeuchte gemessen. Es wird dann die Lüfterdrehzahl mit zunehmender Luftfeuchte erniedrigt und mit abnehmender Luftfeuchte erhöht. Die Luftfeuchte kann dabei als absolute oder relative Luftfeuchte festgelegt sein. Dadurch kann der Einfluss starker Luftfeuchteänderungen auf den Luftmassenstrom, wie z.B. bei zu überwachenden klimatisierten EDV-Anlagen oder aufgrund meteorologischer Änderungen, wie z.B. durch Nebel, durch eine entsprechende geänderte Einstellung der Lüfterdrehzahl zumindest in etwa ausgeglichen werden.

Vorzugsweise wird dann die Lüfterdrehzahl in Abhängigkeit von der Luftfeuchte, d.h. von der gemessenen absoluten oder relativen Luftfeuchtigkeit, derart eingestellt, dass der Luftstrom im Wesentlichen unverändert bleibt.

Auch in diesem Fall kann die Erniedrigung bzw. Erhöhung über eine empirische Funktion nachgebildet werden. Die Funktion kann wiederum eine Begrenzungsfunktion aufweisen, welche bei Überschreiten einer vorgebbaren oberen Grenze für die Luftfeuchte und/oder bei Unterschreiten einer vorgebbaren unteren Luftfeuchte die Lüfterdrehzahl unverändert lässt.

In Summe wird somit die Lüfterdrehzahl in Abhängigkeit von der gemessenen Lufttemperatur und von der gemessenen Luftfeuchte sowie gegebenenfalls vom gemessenen Luftdruck erhöht bzw. erniedrigt. Hierzu kann eine gemeinsame Funktion gebildet werden, welche die beiden gemessenen physikalischen Eingangswerte Lufttemperatur und Luftfeuchte oder auch alle drei Eingangswerte Lufttemperatur, Luftfeuchte und Luftdruck in einen einzustellenden Lüfterdrehzahlwert abbildet.

Vorzugsweise wird die Lufttemperatur der angesaugten Luft gemessen. Dies kann z.B. mittels eines im Luftstrommesser integrierten Temperatursensors erfolgen. Sind geringe Temperaturschwankungen nicht zu erwarten, wie z.B. in klimatisierten Räumen, so kann auch die Umgebungstemperatur im Bereich des Ansaugrauchmelders gemessen werden. Selbiges trifft auf den zu messenden Luftdruck und/oder auf die zu messende Luftfeuchtigkeit zu. Diese können im Ansaugluftstrom oder davon getrennt im Bereich des Ansaugrauchmelders gemessen werden.

Die Aufgabe der Erfindung wird mit einem zum erfindungsgemässen Verfahren korrespondierenden Ansaugrauchmelder gelöst.

Erfindungsgemäss weist der Ansaugrauchmelder eine Abbildungseinrichtung auf, die dazu eingerichtet ist, die Lüfterdrehzahl mit zunehmender Lufttemperatur zu erhöhen und mit abnehmender Lufttemperatur zu erniedrigen. Eine solche Abbildungseinrichtung kann eine analoge und/oder digitale elektronische Schaltung sein, welche z.B. A/D-Umsetzer, Verstärker, Komparatoren, Operationsverstärker für die elektronische Abbildung der Kennlinien etc. aufweist. Im einfachsten Fall ist diese Einrichtung ein Mikrocontroller, welcher üblicherweise "sowieso" zur gesamten Steuerung des Ansaugrauchmelders vorhanden ist. Die Abbildungsfunktion der physikalischen Eingangsgrösse Lufttemperatur und gegebenenfalls des Luftdruck und der Luftfeuchte in einen Lüfterdrehzahlsollwert wird vorzugsweise durch Programmschritte nachgebildet, die vom Mikrocontroller ausgeführt werden, gegebenenfalls unter Heranziehung elektronisch hinterlegter Tabellenwerte. Ein entsprechendes Computerprogramm kann in einem nichtflüchtigen Speicher des Mikrocontrollers hinterlegt sein. Es kann alternativ von einem externen Speicher geladen werden. Weiterhin kann der Mikrocontroller einen oder mehrere integrierte A/D-Umsetzer zur messtechnischen Erfassung der zuvor beschriebenen Eingangsgrössen Lufttemperatur, Luftdruck und Luftfeuchtigkeit aufweisen.

Gemäss einer Ausführungsform weist die Abbildungseinrichtung erste Mittel zur linearen, insbesondere zur proportionalen Erhöhung bzw. Erniedrigung der Lüfterdrehzahl in Abhängigkeit von der gemessenen Lufttemperatur auf. Die ersten Mittel können derart ausgebildet sein, dass der (zu erwartende) Luftstrom, d.h. der Luftvolumenstrom bzw. der im Wesentlichen dazu proportionale Luftmassenstrom, im Wesentlichen unverändert bleibt.

Nach einer weiteren Ausführungsform weist der Ansaugrauchmelder einen Luftdrucksensor zur Messung des Luftdrucks, insbesondere der angesaugten Luft, auf. Die Abbildungseinrichtung weist in diesem Fall zweite Mittel zur insbesondere umgekehrt proportionalen Erniedrigung bzw. Erhöhung der Lüfterdrehzahl in Abhängigkeit des gemessenen Luftdrucks derart auf, dass der (zu erwartende) Luftstrom im Wesentlichen unverändert bleibt.

Alternativ oder zusätzlich weist der Ansaugrauchmelder einen Luftfeuchtesensor zur Messung der Luftfeuchte, insbesondere der angesaugten Luft auf. Die Abbildungseinrichtung weist hierzu dritte Mittel zur Erniedrigung bzw. zur Erhöhung der Lüfterdrehzahl in Abhängigkeit der gemessenen Luftfeuchte derart auf, dass der (zu erwartende) Luftstrom im Wesentlichen unverändert bleibt.

Die ersten, zweiten und dritten Mittel können auch eine elektronisch hinterlegte Tabelle aufweisen bzw. referenzieren, welche Lufttemperaturwerten und gegebenenfalls Luftdruck und/oder Luftfeuchtewerten einen jeweiligen Lüfterdrehzahlwert zuordnet. Dieser Wert kann z.B. über einen D/A-Umsetzer als Sollwert für eine elektronische Motorsteuerung des Lüfters ausgegeben. Die Motorsteuerung kann dabei im bereits Lüfter integriert sein. Sie weist zur Regelung der Lüfterdrehzahl insbesondere einen Eingang für den Istwert der aktuellen Lüfterdrehzahl auf. Dieser Istwert kann z.B. von einem Tachogenerator des Lüftermotors stammen.

Die Erfindung sowie vorteilhafte Ausführungen der vorliegenden Erfindung werden am Beispiel der nachfolgenden Figuren erläutert. Dabei zeigen:

FIG 1    ein beispielhaftes Ablaufdiagramm zur Erläuterung des erfindungsgemässen Verfahrens,
FIG 2    ein Beispiel für einen erfindungsgemässen Ansaugrauchmelder gemäss einer ersten Ausführungsform,
FIG 3    ein Beispiel für eine Abbildungseinrichtung des Ansaugrauchmelders gemäss FIG 2,
FIG 4    ein Beispiel für einen Ansaugrauchmelder gemäss einer zweiten Ausführungsform und
FIG 5    ein Beispiel für eine weitere Abbildungseinrichtung des Ansaugrauchmelders.

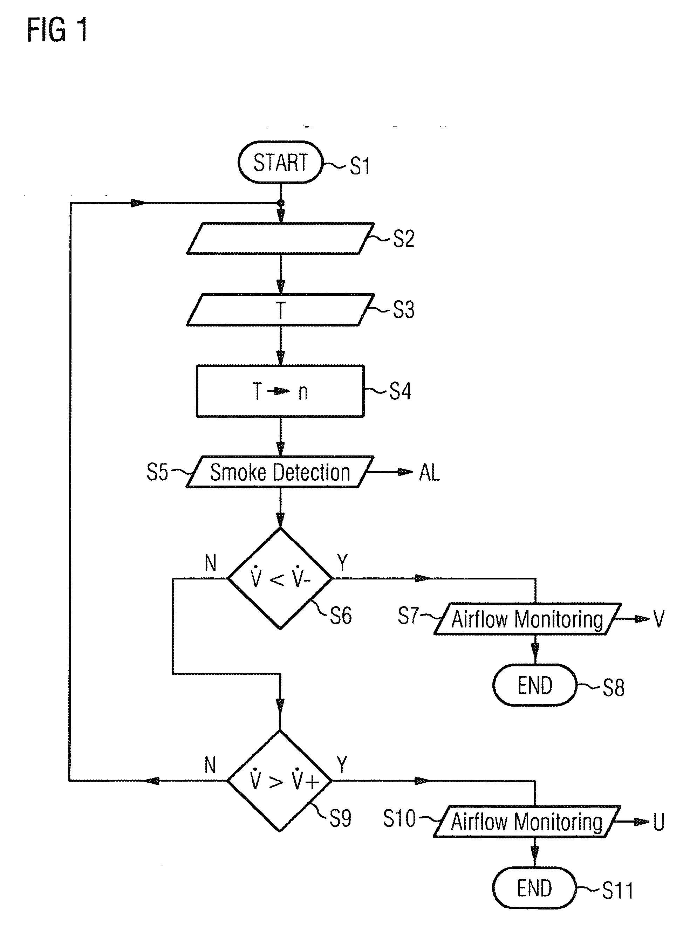

FIG 1 zeigt ein beispielhaftes Ablaufdiagramm zur Erläuterung des erfindungsgemässen Verfahrens zum Erkennen von Verstopfungen und Unterbrüchen in einem Rohrsystem eines Ansaugrauchmelders, bei dem Luft mittels eines Lüfters über das Rohrsystem aus zu überwachenden Räumen und Einrichtungen angesaugt wird. Die zu überwachenden Räume können EDV- oder Server-Räume sein. Die Einrichtungen können elektrische oder elektronische Einrichtungen wie Schaltschränke oder Container sein.

Im Schritt S2 wird zur Erfassung des Luftstroms beispielhaft der Luftvolumenstrom $\dot{V}$ zumindest eines Teils der angesaugten Luft gemessen. Der Teil der angesaugten Luft kann z.B. nur 2% des gesamten zu überwachenden Luftstroms betragen.

Im Schritt S3 wird die Lufttemperatur T, vorzugsweise die Lufttemperatur der angesaugten Luft gemessen.

Im Schritt S4 wird gemäss der Erfindung die Drehzahl n des Lüfters mit zunehmender Lufttemperatur T (geregelt) erhöht und mit abnehmender Lufttemperatur T (geregelt) erniedrigt.

Im folgenden Schritt S5 wird die angesaugte Luft auf Brandkenngrössen hin überwacht und eine Meldung, insbesondere eine Brandmeldung AL, ausgegeben, wenn zumindest eine der erfassten bzw. gemessenen Brandkenngrössen einen vorgegeben Grenzwert überschreitet. Als Brandkenngrössen werden physikalische Grössen verstanden, die in der Umgebung eines Entstehungsbrandes messbaren Veränderungen unterliegen, zum Beispiel die Umgebungstemperatur, der Feststoff- oder Flüssigkeits- oder Gasanteil in der Umgebungsluft oder Umgebungsstrahlung. Insbesondere wird die Bildung der Rauchpartikel oder Rauchaerosolen oder die Bildung von Dampf oder Brandgasen detektiert.

Im Schritt S6 wird geprüft, ob der gemessene Luftvolumenstrom V einen vorgegebenen unteren Grenzwert $\dot{V}$ - unterschreitet. Ist dies der Fall, so wird im Schritt S7 eine Verstopfungsmeldung V ausgegeben.

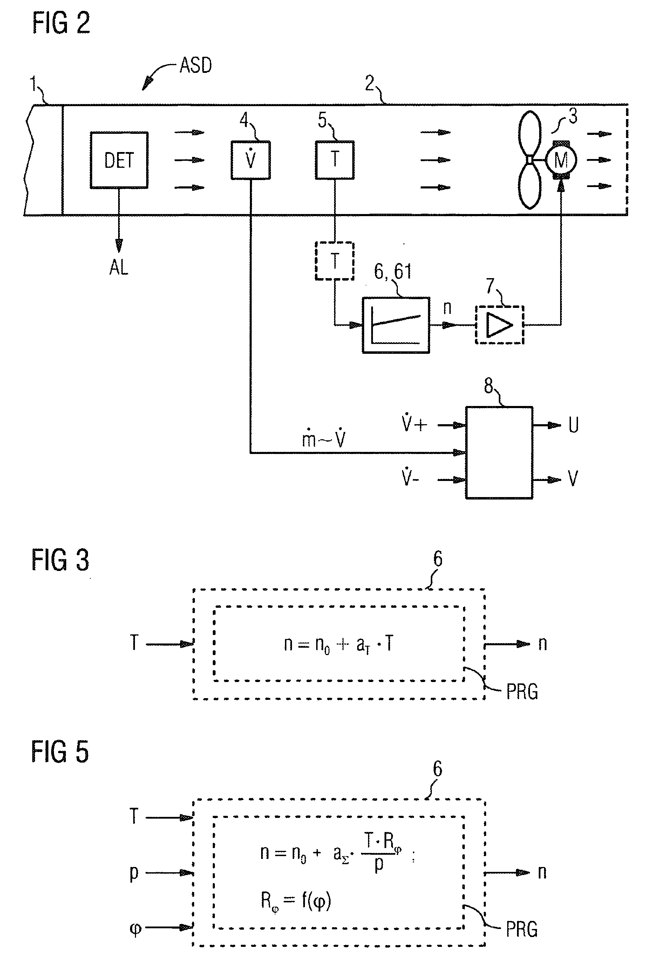

Im anderen Fall wird im Schritt S9 geprüft, ob der gemessene Luftvolumenstrom $\dot{V}$ einen vorgegebenen oberen Grenzwert $\dot{V}$ + überschreitet. Ist dies der Fall, so wird im Schritt 10 eine Unterbruchmeldung U ausgegeben. Mit dem Bezugszeichen S8 und S11 ist das jeweilige Ende des Ablaufdiagramms bezeichnet. FIG 2 zeigt ein Beispiel für einen erfindungsgemässen Ansaugrauchmelder ASD gemäss einer ersten Ausführungsform. Derartige Rauch- oder Brandmelder weisen eine Ansaug-/Detektoreinheit 2 und ein daran anschliessbares Rohrsystem 1 mit einer Vielzahl verteilt angeordneter Ansaugöffnungen auf. Diese Ansaugöffnungen können mehrere Meter voneinander entfernt sein und verschiedenen Objekten oder Räumlichkeiten zugeordnet sein. Die Ansaug-/Detektoreinheit 2 umfasst einen Lüfter 3, wie z.B. einen Axial- oder Radiallüfter. Über diesen wird dann zumindest ein Teil der Raum- oder Geräteluft einem Detektor DET zur Überwachung der angesaugten Luft auf Brandkenngrössen hin zugeführt. Der vorzugsweise nach dem optischen Streuprinzip arbeitende Detektor DET analysiert kontinuierlich die zugeführten Luftproben und gibt eine Warn- oder Brandmeldung AL aus, falls zumindest eine der Brandkenngrössen einen jeweiligen Grenzwert überschreitet. Hierzu weist der Detektor DET eine nicht weiter bezeichnete Auswerteinheit zur Ausgabe der Warn- oder Brandmeldung AL auf.

Der beispielhafte Ansaugrauchmelder ASD weist ferner einen Luftstrommesser 4 zur Messung des Luftvolumenstroms $\dot{V}$ zumindest eines Teils der angesaugten Luft auf. Es kann dabei der Luftvolumenstrom $\dot{V}$ der gesamten

angesaugten Luft oder nur ein Teil der Luft, wie z.B. mittels eines Bypasses oder einer Rohrsonde, gemessen werden. Der Luftstrommesser 4 misst das Volumen der durchströmenden Luft pro Zeiteinheit, d.h. den Luftvolumenstrom V. Der Luftstrommesser 4 kann z.B. ein Flügelrad-Anemometer sein.

Vorzugsweise ist der Luftstrommesser 4 ein thermisches Anemometer, wie z.B. ein Hitzdraht-Anemometer. Zur besonderes genauen Messung kann ein solches Anemometer vier temperaturabhängige Widerstände, insbesondere Platin-Messwiderstände aufweisen, die in einer Wheatstone'schen Brückenschaltung geschaltet sind. Dem physikalischen Wirkungsprinzip nach misst ein derartiges thermisches Anemometer praktisch den Luftmassenstrom $\dot{m}$, der proportional zu der über die in gewissem Masse von der Lufttemperatur, dem Luftdruck und der Luftfeuchtigkeit abhängigen Dichte der angesaugten Luft ist (symbolisiert durch die Beziehung $\dot{m} \sim \dot{V}$). Damit ein solches thermisches Anemometer einen möglichst genauen Messwert für den Luftvolumenstrom $\dot{V}$ bereitstellen kann, kann dieses zur Temperatur-, Luftdruck- und/oder Luftfeuchtekompensation entsprechende integrierte Sensoren aufweisen, wie einen Temperatursensor, einen Luftdrucksensor und/oder einen Luftfeuchtesensor. Alternativ oder zusätzlich kann diese Kompensation über die nachfolgend beschriebene Abbildungseinrichtung 6 mit ihren ersten Mitteln 61 und gegebenenfalls mit ihren zweiten und dritten Mitteln 63 (siehe dazu FIG 6) "mitberücksichtigt" werden.

Weiterhin ist im Luftstrom ein Temperatursensor 5 zur Messung der Lufttemperatur T angeordnet. Er kann alternativ, wie gestrichelt dargestellt, auch ausserhalb des Luftstroms in der Ansaug-/Detektoreinheit 2 angeordnet sein, wenn keine grossen Temperaturschwankungen zu erwarten sind. Der Luftstromsensor 4 und der Temperatursensor 5 können auch als gemeinsamer Sensor ausgebildet sein.

Der Ansaugrauchmelder ASD umfasst weiterhin eine Luftstromüberwachungseinrichtung 8 zur Ausgabe einer Verstopfungsmeldung V für den Fall, dass der Luftvolumenstrom $\dot{V}$ einen vorgegebenen unteren Grenzwert $\dot{V}$ - unterschreitet, und zur Ausgabe einer Unterbrechungsmeldung U für den Fall, dass der Luftvolumenstrom $\dot{V}$ einen vorgegebenen oberen Grenzwert $\dot{V}$ + überschreitet. Die in der FIG 2 gezeigte beispielhafte Luftstromüberwachungseinrichtung 8 entspricht dabei in ihrer Funktion einem Fensterdiskriminator.

Erfindungsgemäss weist der Ansaugrauchmelder ASD eine Abbildungseinrichtung 6 auf, die dazu eingerichtet ist, die Drehzahl n des Lüfters 3 mit zunehmender Lufttemperatur T zu erhöhen und mit abnehmender Lufttemperatur T zu erniedrigen. Die vorzugsweise lineare, insbesondere proportionale Erhöhung bzw. Erniedrigung ist durch das Reglersymbol im Kasten der Abbildungseinrichtung 6 symbolisiert. Ausgangsseitig gibt die Abbildungseinrichtung 6 einen entsprechenden Lüfterdrehzahlwert n aus, welcher einer elektronischen Motorsteuerung 7 als Sollwert zugeführt wird. Die Motorsteuerung 7 kann, wie bei vielen Axial- oder Radiallüftern bekannt, bereits im Lüfter integriert sein. Durch die Änderung der Lüfterdrehzahl n wird erreicht, dass der zu erwartende Luftvolumenstrom V im Wesentlichen unverändert bleibt. Mit anderen Worten verändert sich das Ausgangssignal des Luftsensors 4, d.h. des Luftvolumenmessers, unwesentlich, wenn sich nur die Lufttemperatur T der angesaugten Luft ändert und daraufhin die Lüfterdrehzahl in entsprechender Weise zum Ausgleich des Temperatureffektes angepasst wird.

FIG 3 zeigt ein Beispiel für eine Abbildungseinrichtung 6 des Ansaugrauchmelders ASD gemäss FIG 2.

Die dabei im Kasten gezeigte Abbildungsfunktion

$$n = n_0 + a_T \cdot T \qquad\qquad\qquad (IV)$$

beschreibt die lineare Abbildung der gemessenen Lufttemperatur T in eine Drehzahl n für den Lüfter. Mit $n_0$ ist eine für eine vorgebbare Temperatur, z.B. bei 25 °C, vorgebbare Grunddrehzahl, wie z.B. 5000 UpM, bezeichnet. Mit $a_T$ ist ein geeigneter vorgebbarer Steigungskoeffizient für die Abbildung bezeichnet. In diesem Steigungskoeffizienten $a_T$ kann gegebenenfalls auch eine Temperaturkompensation im Falle der Verwendung eines Luftmassenmessers, wie in FIG 2 beschrieben, mitberücksichtigt sein. Mit dem Bezugszeichen PRG ist ein Computerprogramm bezeichnet, welches Programmschritte zur rechnerischen Nachbildung der zuvor beschriebenen linearen Abbildung aufweisen kann. Dieses Programm PRG kann zusammen mit weiteren Programmen, wie z.B. zur Auswertung der optischen Detektorsignale des Detektors DET, auf einem Mikrocontroller des Ansaugrauchmelders ASD ausgeführt werden.

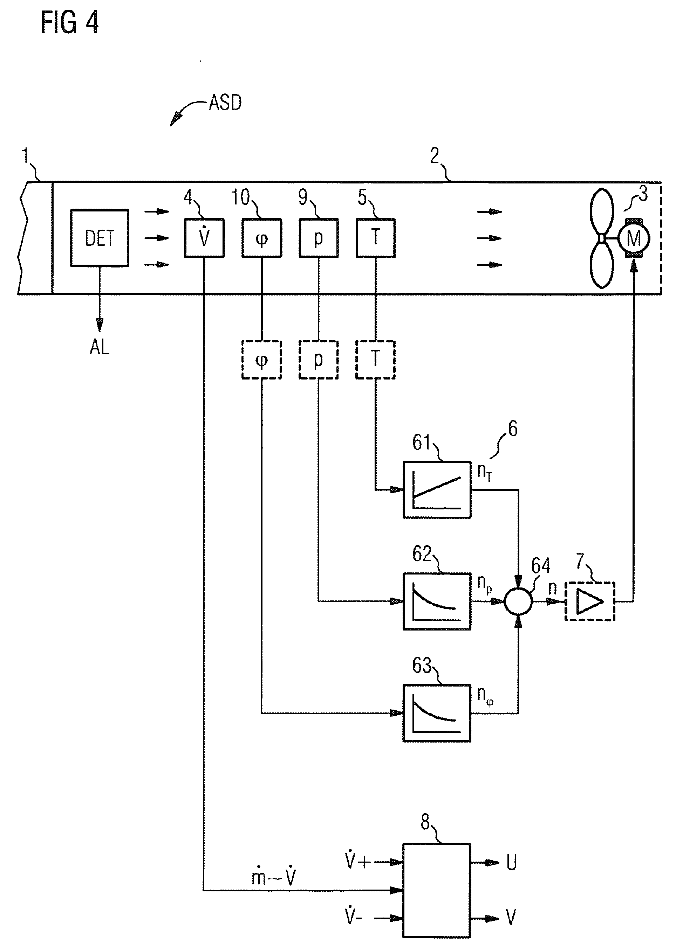

FIG 4 zeigt ein Beispiel für einen Ansaugrauchmelder ASD gemäss einer zweiten Ausführungsform. In diesem Fall weist der Ansaugrauchmelder ASD zusätzlich zum Luftvolumenmesser 4 und zum Temperatursensor 5 einen Luftdrucksensor 9 zur Messung des Luftdrucks p und einen Luftfeuchtesensor 10 zur Messung der Luftfeuchte φ auf. Im vorliegenden Beispiel sind alle Sensoren 5, 9, 10 in der Ansaug-/Detektoreinheit 2 angeordnet. Sie werden folglich vom angesaugten Luftstrom umströmt. Alternativ können diese Sensoren 5, 9, 10 - wie gestrichelt dargestellt - auch ausserhalb des Luftstroms angeordnet sein. Wie die FIG 4 weiter zeigt, werden die jeweiligen Sensorsignale für Lufttemperatur T, Luftdruck p und Luftfeuchte gemäss der Erfindung einer Abbildungseinrichtung 6 zugeführt.

Diese Abbildungseinrichtung 6 weist erste Mittel 61 zur im Wesentlichen linearen, insbesondere proportionalen Erhöhung bzw. Erniedrigung der Lüfterdrehzahl n, $n_T$ in Abhängigkeit von der gemessenen Lufttemperatur T auf. Sie weist weiterhin zweite Mittel 62 zur insbesondere umgekehrt proportionalen Erniedrigung bzw. Erhöhung der Lüfter-

drehzahl n, $n_p$ in Abhängigkeit des gemessenen Luftdrucks p auf. Sie weist weiterhin dritte Mittel 63 zur Erniedrigung bzw. zur Erhöhung der Lüfterdrehzahl n, $n_\varphi$ in Abhängigkeit der gemessenen Luftfeuchte φ derart auf, dass in Summe der zu erwartenden Luftvolumenstrom V im Wesentlichen unverändert bleibt. Mit $n_T$, $n_p$, $n_\varphi$ sind von der jeweiligen Eingangsgrösse T, p, φ abhängige Teillüfterdrehzahlen bezeichnet, die im vorliegenden Beispiel einer Bewertungseinrichtung 64 zugeführt werden. Im einfachsten Fall ist die Bewertungsfunktion 64 ein Mittelwertbildner für die zu bestimmende Lüfterdrehzahl n. Sie kann auch Gewichtungsmittel aufweisen, um den jeweiligen Einfluss der Eingangsgrösse T, p und φ auf die Lüfterdrehzahl n zu gewichten, so dass in Summe der zu erwartende Luftvolumenstrom $\dot{V}$ bei Veränderung aller Eingangsgrössen T, p und φ im Wesentlichen unverändert bleibt.

Ergänzend wird angemerkt, dass in den Teillüfterdrehzahlen $n_T$, $n_p$, $n_\varphi$ gegebenenfalls auch eine Temperatur-, Luftdruck-und/oder Luftfeuchtekompensation im Falle der Verwendung eines Luftmassenmessers, wie in FIG 2 beschrieben, mitberücksichtigt sein kann.

Schliesslich wird als Sollwert die ermittelte Lüfterdrehzahl n einer elektronischen Motorsteuerung für den Lüfter 3 zugeführt. Diese wertet hierzu ein nicht weiter dargestelltes Tachosignal vom Lüfter 3 zum Regeln der Lüfterdrehzahl n aus.

FIG 5 zeigt ein Beispiel für eine weitere Abbildungseinrichtung 6 des Ansaugrauchmelders ASD. Im vorliegenden Beispiel werden die Mittel der Abbildungseinrichtung 6 durch ein Computerprogramm PRG realisiert, welches alle drei Eingangsgrössen T, p und φ über die gezeigte beispielhafte lineare Funktion

$$ n = n_0 + a_\Sigma . \frac{T \cdot R_\varphi}{p} \qquad\qquad (\text{V}) $$

in die Lüfterdrehzahl n als Sollwert abbildet, so dass in Summe der zu erwartende Luftvolumenstrom $\dot{V}$ wieder im Wesentlichen unverändert bleibt. Mit $a_\Sigma$ ist wiederum ein geeigneter vorgebbarer Steigungskoeffizient bezeichnet. Mit $R_f$ ist die als Funktion von φ, das heisst von der Luftfeuchte φ massgeblich abhängige Gaskonstante (siehe Gleichung III) bezeichnet.

Bezugszeichenliste

| | |
|---|---|
| 1 | Rohrsystem |
| 2 | Ansaug-/Detektoreinheit |
| 3 | Lüfter, Ventilator |
| 4 | Luftstromsensor, Luftmassenmesser |
| 5 | Temperatursensor |
| 6 | Abbildungseinrichtung |
| 61 | erste Mittel |
| 62 | zweite Mittel |
| 63 | dritte Mittel |
| 64 | Bewertungseinrichtung |
| 7 | Lüftersteuerung, Motorsteuerung |
| 8 | Luftstromüberwachungseinrichtung, Komparator, Fensterdiskriminator |

| | |
|---|---|
| AL | Warn- oder Brandmeldung, Alarm |
| ASD | Ansaugrauchmelder |
| $a_T$, aΣ | Steigungskoeffizienten |
| DET | Detektoreinheit |
| n | Lüfterdrehzahl |
| $n_0$ | Grunddrehzahl |
| p | Luftdruck |
| PRG | Computerprogramm |
| Rφ | Gaskonstante für Luft |
| S1-S11 | Schritte |
| T | Lufttemperatur |
| U | Unterbruchmeldung |
| V | Verstopfungsmeldung |

$\dot{m}$      Luftmassenstrom
$\dot{V}$      Luftvolumenstrom
$\dot{m}+$      oberer Grenzwert
$\dot{m}-$      unterer Grenzwert
$\varphi$      Luftfeuchte, Luftfeuchtigkeit

**Patentansprüche**

1. Verfahren zum Erkennen von Verstopfungen und Unterbrüchen in einem Rohrsystem (1) eines Ansaugrauchmelders (ASD),

   - wobei Luft mittels eines Lüfters (3) über das Rohrsystem (1) aus zu überwachenden Räumen und Einrichtungen angesaugt und auf Brandkenngrössen hin überwacht wird,
   - wobei der Luftstrom ($\dot{V},\dot{m}$) zumindest eines Teils der angesaugten Luft und die Lufttemperatur (T) gemessen werden,
   - wobei eine Verstopfungsmeldung (V) ausgegeben wird, wenn der Luftstrom ($\dot{V},\dot{m}$) einen vorgegebenen unteren Grenzwert ($\dot{V}-,\dot{m}-$) unterschreitet, und/oder
   - wobei eine Unterbruchmeldung (U) ausgegeben wird, wenn der Luftstrom ($\dot{V},\dot{m}$) einen vorgegebenen oberen Grenzwert ($\dot{V}+,\dot{m}+$) überschreitet,

   **dadurch gekennzeichnet, dass** die Drehzahl (n) des Lüfters (3) mit zunehmender Lufttemperatur (T) erhöht und mit abnehmender Lufttemperatur (T) erniedrigt wird.

2. Verfahren nach Anspruch 1, **dadurch gekennzeichnet, dass** die Lüfterdrehzahl (n) im Wesentlichen linear, insbesondere proportional zur gemessenen Lufttemperatur (T) erhöht bzw. erniedrigt wird.

3. Verfahren nach Anspruch 1 oder 2, **dadurch gekennzeichnet, dass** die Lüfterdrehzahl (n) in Abhängigkeit von der Lufttemperatur (T) derart eingestellt wird, dass der Luftstrom ($\dot{V},\dot{m}$) im Wesentlichen unverändert bleibt.

4. Verfahren nach einem der vorherigen Ansprüche, **dadurch gekennzeichnet, dass** der Luftdruck (p) gemessen wird und dass zusätzlich die Lüfterdrehzahl (n) mit zunehmendem Luftdruck (p) erniedrigt und mit abnehmendem Luftdruck (p) erhöht wird.

5. Verfahren nach Anspruch 4, **dadurch gekennzeichnet, dass** die Lüfterdrehzahl (n) im Wesentlichen umgekehrt proportional zum gemessenen Luftdruck (p) erniedrigt bzw. erhöht wird.

6. Verfahren nach Anspruch 4 oder 5, **dadurch gekennzeichnet, dass** die Lüfterdrehzahl (n) in Abhängigkeit vom Luftdruck (p) derart eingestellt wird, dass der Luftstrom ($\dot{V},\dot{m}$) im Wesentlichen unverändert bleibt.

7. Verfahren nach einem der vorherigen Ansprüche, **dadurch gekennzeichnet, dass** die Luftfeuchte ($\varphi$) gemessen wird und dass zusätzlich die Lüfterdrehzahl (n) mit zunehmender Luftfeuchte ($\varphi$) erniedrigt und mit abnehmender Luftfeuchte ($\varphi$) erhöht wird.

8. Verfahren nach Anspruch 7, **dadurch gekennzeichnet, dass** die Lüfterdrehzahl (n) in Abhängigkeit von der Luftfeuchte ($\varphi$) derart eingestellt wird, dass der Luftstrom ($\dot{V},\dot{m}$) im Wesentlichen unverändert bleibt.

9. Verfahren nach einem der vorherigen Ansprüche, **dadurch gekennzeichnet, dass** die Lufttemperatur (T), der Luftdruck (p) und/oder die Luftfeuchte ($\varphi$) der angesaugten Luft gemessen wird.

10. Verfahren nach einem der vorherigen Ansprüche, **dadurch gekennzeichnet, dass** zur Luftstrommessung der Luftvolumenstrom ($\dot{V}$) oder der Luftmassenstrom ($\dot{m}$) gemessen wird.

11. Ansaugrauchmelder (ASD), welcher zumindest aufweist,

    - einen Detektor (DET) für Brandkenngrössen mit einer Auswerteinheit zur Ausgabe einer Warn- oder Brandmeldung (AL),
    - einen Lüfter (3) mit einem daran angeschlossenen Rohrsystem (1) zum Zuführen von Luft zum Detektor (DET),

- einen Luftstrommesser (4) zum Messen des Luftstroms ($\dot{V},\dot{m}$) zumindest eines Teils der angesaugten Luft,
- einen Temperatursensor (5) zum Messen der Lufttemperatur (T), insbesondere der angesaugten Luft,
- eine Luftstromüberwachungseinrichtung (8) zur Ausgabe einer Verstopfungsmeldung (V) für den Fall, dass der Luftstrom ($\dot{V},\dot{m}$) einen vorgegebenen unteren Grenzwert ($\dot{V}$-,$\dot{m}$-) unterschreitet, und zur Ausgabe einer Unterbrechungsmeldung (U) für den Fall, dass der Luftstrom ($\dot{V},\dot{m}$) einen vorgegebenen oberen Grenzwert ($\dot{V}$+,$\dot{m}$+) überschreitet,

**gekennzeichnet durch** eine Abbildungseinrichtung (6), dazu eingerichtet, die Lüfterdrehzahl (n, $n_T$) mit zunehmender Lufttemperatur (T) zu erhöhen und mit abnehmender Lufttemperatur (T) zu erniedrigen.

12. Ansaugrauchmelder (ASD) nach Anspruch 11, **dadurch gekennzeichnet, dass** die Abbildungseinrichtung (6) erste Mittel (61) zur linearen, insbesondere proportionalen Erhöhung bzw. Erniedrigung der Lüfterdrehzahl (n) in Abhängigkeit von der gemessenen Lufttemperatur (T) aufweist.

13. Ansaugrauchmelder (ASD) nach Anspruch 11 oder 12, **dadurch gekennzeichnet, dass** die Abbildungseinrichtung (6) erste Mittel (61) zur Erhöhung bzw. Erniedrigung der Lüfterdrehzahl (n) in Abhängigkeit der gemessenen Lufttemperatur (T) derart aufweist, dass der Luftstrom ($\dot{V},\dot{m}$) im Wesentlichen unverändert bleibt.

14. Ansaugrauchmelder (ASD) nach einem der Ansprüche 11 bis 13, **dadurch gekennzeichnet,**

- **dass** der Ansaugrauchmelder (ASD) einen Luftdrucksensor (9) zum Messen des Luftdrucks (p), insbesondere der angesaugten Luft, aufweist, und dass die Abbildungseinrichtung (6) zweite Mittel (62) zur insbesondere umgekehrt proportionalen Erniedrigung bzw. Erhöhung der Lüfterdrehzahl (n, np) in Abhängigkeit des gemessenen Luftdrucks (p) derart aufweist, dass der Luftstrom ($\dot{V},\dot{m}$) im Wesentlichen unverändert bleibt, und/oder
- **dass** der Ansaugrauchmelder (ASD) einen Luftfeuchtesensor (10) zum Messen der Luftfeuchte ($\varphi$), insbesondere der angesaugten Luft, aufweist, und dass die Abbildungseinrichtung (6) dritte Mittel (63) zur Erniedrigung bzw. zur Erhöhung der Lüfterdrehzahl (n, $n_\varphi$) in Abhängigkeit der gemessenen Luftfeuchte ($\varphi$) derart aufweist, dass der Luftstrom ($\dot{V},\dot{m}$) im Wesentlichen unverändert bleibt.

15. Ansaugrauchmelder (ASD) nach Anspruch 11 oder 14, **dadurch gekennzeichnet, dass** der Ansaugrauchmelder (ASD) zum Messen des Luftstroms ($\dot{V},\dot{m}$) einen Luftvolumenmesser oder einen Luftmassenmesser (4) aufweist.

## Claims

1. Method for detecting blockages and interruptions in a pipe system (1) of an aspirating smoke detector (ASD),

- wherein air is aspirated by means of a ventilator (3) by way of the pipe system (1) from rooms and devices that are to be monitored and monitoring takes place for any characteristics of fire,
- wherein the air flow ($\dot{V}$, $\dot{m}$) of at least one part of the aspirated air is measured, as is the air temperature (T),
- wherein a blockage alarm (V) is output, if the air flow ($\dot{V}$, $\dot{m}$) falls below a predetermined lower limit value ($\dot{V}$-, $\dot{m}$-) and/or
- wherein an interruption alarm (U) is output, if the air flow ($\dot{V}$, $\dot{m}$) rises above a predetermined upper limit value ($\dot{V}$+, $\dot{m}$+) ,

**characterised in that** the rotational speed (n) of the ventilator (3) is increased as the air temperature (T) rises and reduced as the air temperature (T) drops.

2. Method according to claim 1, **characterised in that** the ventilator rotational speed (n) is increased and reduced in an essentially linear manner, in particular in proportion to the measured air temperature (T).

3. Method according to claim 1 or 2, **characterised in that** the ventilator rotational speed (n) is set as a function of the air temperature (T) so that the air flow ($\dot{V}$, $\dot{m}$) remains essentially unchanged.

4. Method according to one of the preceding claims, **characterised in that** the air pressure (p) is measured and the ventilator rotational speed (n) is also reduced as the air pressure (p) rises and increased as the air pressure (p) drops.

5. Method according to claim 4, **characterised in that** the ventilator rotational speed (n) is reduced and increased in essentially inverse proportion to the measured air pressure (p).

6. Method according to claim 4 or 5, **characterised in that** the ventilator rotational speed (n) is set as a function of the air pressure (p) so that the air flow (*V, m*) remains essentially unchanged.

7. Method according to one of the preceding claims, **characterised in that** the air humidity (φ) is measured and the ventilator rotational speed (n) is also reduced as the air humidity (φ) rises and increased as the air humidity (φ) drops.

8. Method according to claim 7, **characterised in that** the ventilator rotational speed (n) is set as a function of the air humidity (φ) so that the air flow (*V, m*) remains essentially unchanged.

9. Method according to one of the preceding claims, **characterised in that** the air temperature (T), the air pressure (p) and/or the air humidity (φ) of the aspirated air is/are measured.

10. Method according to one of the preceding claims, **characterised in that** the air volume flow (*V*) or the air mass flow (*m*) is measured to measure the air flow.

11. Aspirating smoke detector (ASD), which comprises at least

   - a detector (DET) for characteristics of fire with an evaluation unit for outputting a warning or fire alarm (AL),
   - a ventilator (3) with a pipe system (1) connected thereto for supplying air to the detector (DET),
   - an air flow meter (4) for measuring the air flow (*V, m*) of at least one part of the aspirated air,
   - a temperature sensor (5) for measuring the air temperature (T), in particular of the aspirated air,
   - an air flow monitoring device (8) for outputting a blockage alarm (V) in the event that the air flow (*V, m*) falls below a predetermined lower limit value (*V-, m-*) and for outputting an interruption alarm (U) in the event that the air flow (*V, m*) rises above a predetermined upper limit value (*V+, m+*),

   **characterised by** a mapping device (6), which is designed to increase the ventilator rotational speed (n, $n_T$) as the air temperature (T) rises and reduce it as the air temperature (T) drops.

12. Aspirating smoke detector (ASD) according to claim 11, **characterised in that** the mapping device (6) has first means (61) for increasing and reducing the ventilator rotational speed (n) in a linear, in particular proportional, manner, as a function of the measured air temperature (T).

13. Aspirating smoke detector (ASD) according to claim 11 or 12, **characterised in that** the mapping device (6) has first means (61) for increasing and reducing the ventilator rotational speed (n) as a function of the measured air temperature (T) so that the air flow (*V, m*) remains essentially unchanged.

14. Aspirating smoke detector (ASD) according to one of claims 11 to 13, **characterised in that**

   - the aspirating smoke detector (ASD) has an air pressure sensor (9) for measuring the air pressure (p), in particular of the aspirated air, and the mapping device (6) has second means (62) for reducing and increasing the ventilator rotational speed (n, $n_p$), in particular in inverse proportion, as a function of the measured air pressure (p) so that the air flow (*V, m*) remains essentially unchanged and/or
   - the aspirating smoke detector (ASD) has an air humidity sensor (10) for measuring the air humidity (φ), in particular of the aspirated air, and the mapping device (6) has third means (63) for reducing and increasing the ventilator rotational speed (n, $n_\varphi$) as a function of the measured air humidity (φ) so that the air flow (*V, m*) remains essentially unchanged.

15. Aspirating smoke detector (ASD) according to claim 11 or 14, **characterised in that** the aspirating smoke detector (ASD) has an air volume meter or an air mass meter (4) for measuring the air flow (*V, m*).

**Revendications**

1. Procédé de détection d'obstructions et de ruptures dans un système de tuyauterie (1) d'un détecteur de fumées par aspiration (ASD),

- l'air étant aspiré depuis les espaces et dispositifs à surveiller, au moyen d'un ventilateur (3), en circulant par le système de tuyauterie (1) et les grandeurs caractéristiques d'incendie de l'air étant surveillées,
- l'écoulement d'air ($\dot{V},\dot{m}$) d'au moins une partie de l'air aspiré et la température de l'air (T) étant mesurés,
- un message d'obstruction (V) étant délivré lorsque l'écoulement d'air ($\dot{V},\dot{m}$) passe sous une valeur limite inférieure ($\dot{V}$-,$\dot{m}$-) prédéfinie et/ou
- un message de rupture (U) étant délivré lorsque l'écoulement d'air ($\dot{V},\dot{m}$) dépasse une valeur limite supérieure ($\dot{V}$+,$\dot{m}$+) prédéfinie,

**caractérisé en ce que** la vitesse (n) du ventilateur (3) augmente lorsque la température de l'air (T) s'élève et diminue lorsque la température de l'air (T) baisse.

2. Procédé selon la revendication 1, **caractérisé en ce que** la vitesse du ventilateur (n) augmente resp. diminue de manière essentiellement linéaire, notamment proportionnelle, par rapport à la température de l'air (T) mesurée.

3. Procédé selon la revendication 1 ou 2, **caractérisé en ce que** la vitesse du ventilateur (n) est réglée en fonction de la température de l'air (T) de manière à ce que l'écoulement d'air ($\dot{V},\dot{m}$) demeure essentiellement constant.

4. Procédé selon l'une des revendications précédentes, **caractérisé en ce que** la pression de l'air (p) est mesurée et **en ce que**, de plus, la vitesse du ventilateur (n) diminue lorsque la pression de l'air (p) augmente et augmente lorsque la pression de l'air (p) diminue.

5. Procédé selon la revendication 4, **caractérisé en ce que** la vitesse du ventilateur (n) diminue resp. augmente essentiellement de manière inversement proportionnelle à la pression de l'air (p) mesurée.

6. Procédé selon la revendication 4 ou 5, **caractérisé en ce que** la vitesse du ventilateur (n) est réglée en fonction de la pression de l'air (p) de manière à ce que l'écoulement d'air ($\dot{V},\dot{m}$) demeure essentiellement constant.

7. Procédé selon l'une des revendications précédentes, **caractérisé en ce que** l'humidité de l'air ($\varphi$) est mesurée et **en ce que**, en plus, la vitesse du ventilateur (n) diminue lorsque l'humidité de l'air ($\varphi$) augmente et augmente lorsque l'humidité de l'air ($\varphi$) diminue.

8. Procédé selon la revendication 7, **caractérisé en ce que** la vitesse du ventilateur (n) est réglée en fonction de l'humidité de l'air ($\varphi$) de manière à ce que l'écoulement d'air ($\dot{V},\dot{m}$) demeure essentiellement constant.

9. Procédé selon l'une des revendications précédentes, **caractérisé en ce que** la température de l'air (T), la pression de l'air (p) et/ou l'humidité de l'air ($\varphi$) de l'air aspiré est/sont mesurée/s.

10. Procédé selon l'une des revendications précédentes, **caractérisé en ce que**, pour mesurer l'écoulement d'air, on mesure le débit volumique d'air ($\dot{V}$) ou le débit massique d'air ($\dot{m}$).

11. Détecteur de fumées par aspiration (ASD) qui comprend au moins

- un détecteur (DET) pour les grandeurs caractéristiques d'incendie, avec une unité d'analyse permettant de délivrer un message d'alerte ou d'incendie (AL),
- un ventilateur (3) auquel est raccordé un système de tuyauterie (1) pour amener l'air vers le détecteur (DET),
- un appareil de mesure de l'écoulement d'air (4) pour mesurer l'écoulement d'air ($\dot{V},\dot{m}$) d'au moins une partie de l'air aspiré,
- un capteur de température (5) pour mesurer la température de l'air (T), notamment de l'air aspiré,
- un dispositif de surveillance de l'écoulement d'air (8) pour délivrer un message d'obstruction (V) pour le cas où l'écoulement d'air ($\dot{V},\dot{m}$) passe sous une valeur limite inférieure ($\dot{V}$-,$\dot{m}$-) prédéfinie et pour délivrer un message de rupture (U) pour le cas où l'écoulement d'air ($\dot{V},\dot{m}$) dépasse une valeur limite supérieure ($\dot{V}$+,$\dot{m}$+) prédéfinie,

**caractérisé par** un dispositif d'application (6) adapté pour augmenter la vitesse du ventilateur (n, $n_T$) lorsque la température de l'air (T) s'élève et pour la diminuer lorsque la température de l'air (T) baisse.

12. Détecteur de fumées par aspiration (ASD) selon la revendication 11, **caractérisé en ce que** le dispositif d'application (6) comprend des premiers moyens (61) pour l'augmentation resp. la diminution linéaire, notamment proportionnelle, de la vitesse du ventilateur (n) en fonction de la température de l'air (T) mesurée.

**13.** Détecteur de fumées par aspiration (ASD) selon la revendication 11 ou 12, **caractérisé en ce que** le dispositif d'application (6) comprend des premiers moyens (61) pour l'augmentation resp. la diminution de la vitesse du ventilateur (n) en fonction de la température de l'air (T) mesurée, de manière à ce que l'écoulement d'air $(\dot{V},\dot{m})$ demeure essentiellement constant.

**14.** Détecteur de fumées par aspiration (ASD) selon l'une des revendications 11 à 13, **caractérisé en ce que**

- le détecteur de fumées par aspiration (ASD) comprend un capteur de pression de l'air (9) pour mesurer la pression de l'air (p), notamment de l'air aspiré, et **en ce que** le dispositif d'application (6) comprend des deuxièmes moyens (62) pour la diminution resp. l'augmentation, notamment inversement proportionnelle, de la vitesse du ventilateur (n, $n_p$) en fonction de la pression de l'air (p) mesurée, de manière à ce que l'écoulement d'air $(\dot{V},\dot{m})$ demeure essentiellement constant et/ou
- le détecteur de fumées par aspiration (ASD) comprend un capteur d'humidité de l'air (10) pour mesurer l'humidité de l'air (φ), notamment de l'air aspiré, et **en ce que** le dispositif d'application (6) comprend des troisièmes moyens (63) pour la diminution resp. l'augmentation de la vitesse du ventilateur (n, $n_\varphi$) en fonction de l'humidité de l'air (φ) mesurée, de manière à ce que l'écoulement d'air $(\dot{V},\dot{m})$ demeure essentiellement constant.

**15.** Détecteur de fumées par aspiration (ASD) selon la revendication 11 ou 14, **caractérisé en ce que** le détecteur de fumées par aspiration (ASD) comprend un appareil de mesure du volume d'air ou un appareil de mesure de la masse d'air (4) pour mesurer l'écoulement d'air $(\dot{V},\dot{m})$ .

# FIG 1

START — S1

S2

T — S3

T → n — S4

S5 — Smoke Detection → AL

$\dot{V} < \dot{V}-$  N / Y — S6

S7 — Airflow Monitoring → V

END — S8

$\dot{V} > \dot{V}+$  N / Y — S9

S10 — Airflow Monitoring → U

END — S11

EP 2 407 946 B1

FIG 2

ASD

1

2

4

5

3

DET

$\dot{V}$

T

M

AL

T

6, 61

n

7

8

$\dot{m} \sim \dot{V}$

$\dot{V}+$

U

$\dot{V}-$

V

FIG 3

6

T

$n = n_0 + a_T \cdot T$

n

PRG

FIG 5

6

T

p

$\varphi$

$n = n_0 + a_\Sigma \cdot \dfrac{T \cdot R_\varphi}{p}$ ;

$R_\varphi = f(\varphi)$

n

PRG

14

FIG 4

ASD

1

2

DET

AL

4 $\dot{V}$

10 φ

9 p

5 T

3 M

φ

p

T

61 $n_T$

6

62 $n_p$

64

7

n

63 $n_\varphi$

$\dot{m} \sim \dot{V}$

$\dot{V}+$

$\dot{V}-$

8

U

V

IN DER BESCHREIBUNG AUFGEFÜHRTE DOKUMENTE

**In der Beschreibung aufgeführte Patentdokumente**

- EP 1006500 A2
- EP 1638062 A1
- EP 0696787 A1